# EUROPEAN PATENT APPLICATION

(11) **EP 4 657 265 A1**
(43) Date of publication of application: **03.12.2025**
(21) Application number: 25172969.5
(22) Date of filing: 28.04.2025
(51) Int. Cl.: G06F 11/3668, G06F 11/3698

(54) **SAFETY TESTING SYSTEM AND METHOD**

(30) Priority: 01.05.2024 GB 202406107
(71) Applicant: Siemens Mobility Limited, London, NW1 2PL (GB)
(72) Inventor: Balandis, Robertas, Chippenham, SN15 3NN (GB); Thomas, Mark, Bristol, BS15 9RW (GB)
(74) Representative: Siemens Patent Attorneys

(57) **Abstract**

A safety testing system and method are described. The safety testing system provides a combination of a high integrity safety test reporting system that generates a log file of test results, and low integrity report viewer. The use of the system and method in the context of rail infrastructure systems is also described.

## Description

The present invention relates to a safety testing system and method, in particular a rail infrastructure safety testing system and method.

Safety systems in industrial applications are often classed as high integrity, having complex software-control and used to protect people and environments. Failure of a high integrity system usually results in severe damage or life-threatening consequences. The reliability of a high integrity system is therefore paramount, and the data produced by the system must be to the highest possible level of accuracy. These systems may be used to monitor industrial processes or in the commissioning of industrial processes, which themselves may be classed as high integrity.

High integrity safety systems are required to report testing data and failure events, which may be anything from a minor safety issue all the way through to a major safety-critical event. To provide such reporting data to an operator, a report viewer having the same level of integrity is used. This avoids hazards and errors occurring from incorrectly displayed data. The higher safety integrity of a system, the more it costs to develop, and hence there is an advantage in being able to minimise the required safety level for a particular function. This results in a typical high integrity safety system comprising mixture of higher and lower integrity sub-systems. For example, a high integrity safety system may employ a low integrity input, such as a data preparation system. However, it is difficult to construct a safety case when the output of a high integrity safety system is processed by a lower integrity system. One instance where this is the case is where the high integrity safety system produces a test data report. This requires that the report viewer is the same level of integrity as the high integrity safety system as the report viewer needs to be able to interact with the data at the same integrity level to ensure that data is not corrupted. Incorrect display of the report by the viewer could obviously result in a safety-critical event occurring. For this reason, the results of any safety system having an assigned integrity level may only be viewed using a viewer with the same or higher integrity rating. Minimising the complexity of the high integrity software therefore often results in log files and data that require a specialist viewer in order to be filtered, displayed, reviewed and acted upon.

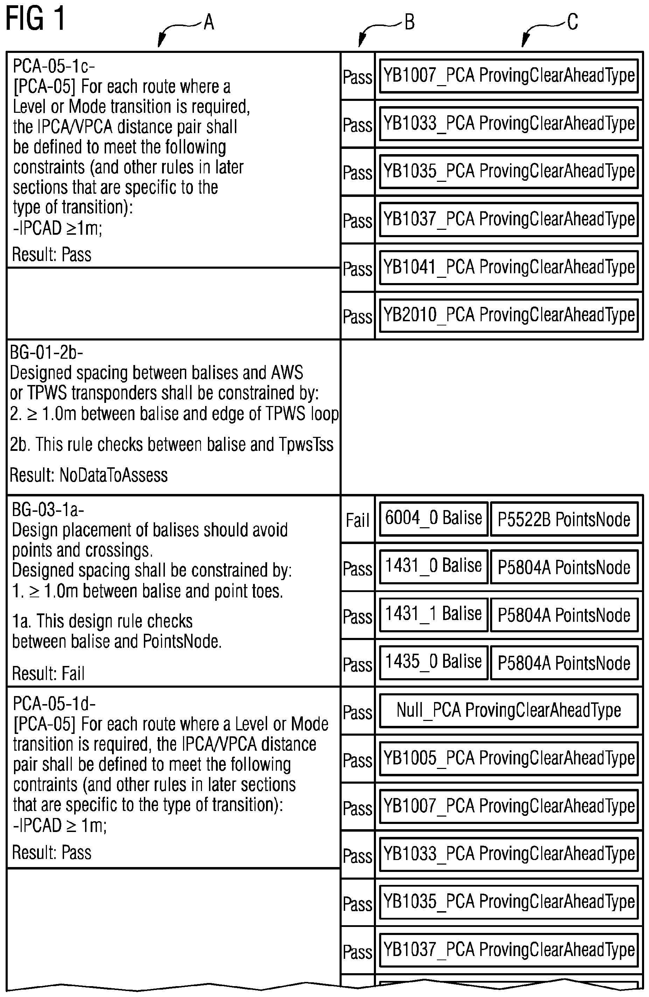

One example of this is within the rail infrastructure industry. Prior to commissioning a signalling design, it is necessary to carry out a number of safety checks in relation to the overall signalling system and its interaction with the rail infrastructure. This is done by a checker, a high integrity safety system, validating the safety data to determine whether or not the signalling design is correct. To illustrate, in an ETCS Level 1 or 2 arrangement (ETCS - European Train Control System) a balise must be positioned at, or further than, a minimum distance away from a set of points due to the risk of RF interference disrupting the balise transmissions. As part of the signalling design, a balise is therefore placed at a specific distance from the set of points, which must be replicated exactly in the on-the-ground implementation of the design. Also, engineering works may result in the repositioning of a balise, and therefore the design may need rechecking against the new balise position. The checker validates the distance between the balise and set of points, and flags as a failure the balise position. In outputting the results of all of the checks carried out by the checker, a log file is produced with results ordered by test or asset then test and displayed in a viewer with the same integrity level as the checker. Hence "route locking" (the signalling design verification) test results are grouped typically by route or test type, with all of the test results for a group of assets collated and listed together. An example of this is shown in Figure 1, which is an excerpt from a test log file for a ETCS design test. The excerpt shows a log comprising three columns of data, A, B, C, where column A contains tests each with an overall result, column B indicates pass/fail for specific assets that are named in column C. The tests in column A are designated by reference number and natural language descriptor. The viewer that the log file is displayed in has the same integrity rating as the checker, with the ability to allow an operator to scroll through results that can be filtered by the operator using the functionality of the viewer software. This adds an additional layer of complexity to the overall high integrity safety system, and runs the risk that the viewer software either does not process the raw data received from the checker correctly, or that the filtering criteria can be set to inadvertently miss critical results, such as the failure to perform a test or a test failure. If the raw data does indeed contain an indication that a test has failed or not been performed, the operator will need to review the results by inputting a selection to the log file viewer to gain further details. Furthermore, the increased complexity of the high integrity software adds to the overall cost of the rail infrastructure project (of which the signalling design is a part), which may be problematic due to the publicly funded nature of most rail infrastructure. There is consequently a need to be able to display critical safety data in a manner that leads to the reduction in the overall complexity of the high integrity safety system.

The present invention aims to address these issues by providing a safety testing system, comprising: a display device; and a server hosting a high integrity safety test reporting system and a low integrity report viewer embedded in the safety testing system; wherein the high integrity safety test reporting system and the low integrity report viewer operate with the display device to display a set of safety test results that require an operator input and are pre-filtered by the high integrity safety test reporting system into a log file prior to display in the low integrity report viewer.

The advantage of this approach is that it leads to an overall simplification of the pre-commissioning process, since both the, input to, and output as viewed and interacted with by an operator from, a high integrity rail infrastructure safety test reporting system, do not need to meet a high safety integrity level requirement.

Preferably, the pre-filtering of the safety test results comprises sorting the results of safety tests in a log file to display test fails first.

Preferably, the low integrity report viewer is a commercial off-the-shelf report viewer. In this situation, the low integrity report viewer may be a browser.

The server may be a cloud-based server or distributed computing server.

Preferably, the safety testing system is a rail infrastructure safety system. Preferably, the high integrity rail infrastructure safety system meets EN 50129 SIL4 requirements. Preferably, the low integrity report viewer does not meet or need to meet any SIL requirements under EN 50129.

Embodiments of the present invention also provide a method of a displaying results generated in a safety testing system to an operator for input, comprising: receiving results of safety tests at a server hosting a high integrity safety test reporting system; pre-filtering the results using the high integrity safety test reporting system into a log file; passing the log file to a low integrity report viewer, wherein the high integrity rail infrastructure safety test reporting system and the low integrity report viewer are embedded in a server in the safety testing system and operating the high integrity safety test reporting system and the low integrity report viewer with a display device to display the log file to an operator for input.

Preferably, the pre-filtering of the safety test results comprises sorting the results of safety tests in a log file to display test fails first.

Preferably, the low integrity report viewer is a commercial off-the-shelf report viewer. In this situation, the low integrity report viewer may be a browser.

The server may be a cloud-based server or distributed computing server.

Preferably, the safety testing system is a rail infrastructure safety system. Preferably, the high integrity rail infrastructure safety system meets EN 50129 SIL4 requirements. Preferably, the low integrity report viewer does not meet or need to meet any SIL requirements under EN 50129.

The present invention will now be described by way of example only, and with reference to the accompanying drawings, in which:
Figure 1 is an excerpt from a test log file for a route locking test;
Figure 2 is a schematic diagram of a safety testing system in accordance with embodiments of the present invention;
Figure 3 is a schematic diagram of a rail infrastructure safety testing system in accordance with embodiments of the present invention;
Figure 4 is an excerpt from a test log file for a ETCS design test using embodiments of the present invention; and
Figure 5 is a flowchart illustrating the steps in a method in accordance with the embodiments of the present invention.

The present invention takes the approach of designing a safety testing system where all safety-critical functions, such as sorting and filtering safety test results, are carried out by a high integrity safety test reporting system, with the results provided pre-filtered to a low integrity viewer that preferably is not editable by a user. The safety testing system comprises a display device; and a server hosting a high integrity safety test reporting system. A low integrity report viewer is also embedded in the safety testing system. The high integrity safety test reporting system and the low integrity report viewer operate with the display device to display a set of safety test results that require an operator input. For example, safety test results arising from a ETCS design test may be displayed for an operator to review and accept or to request further details on or forward to another operator or system. These results are pre-filtered by the high integrity safety test reporting system into a log file prior to display in the low integrity report viewer. This ensures the integrity of the filtering and removes the need for a high integrity report viewer to be provided to the operator.

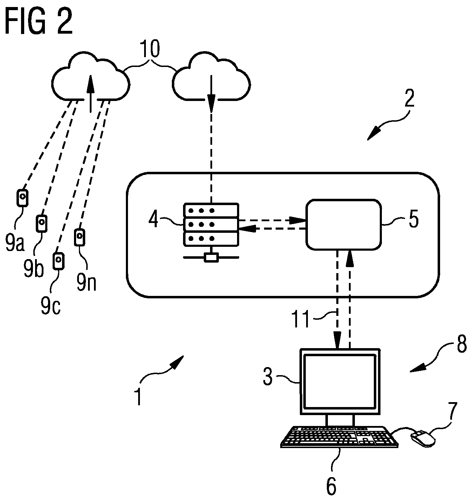

Figure 2 is a schematic diagram of a safety testing system in accordance with embodiments of the present invention. The safety testing system 1 comprises a high integrity safety test reporting system 2 and a display device 3. The high integrity safety test reporting system 2 is hosted on a server 4, and a low integrity report viewer 5 is embedded within the high integrity safety test reporting system 2. A keyboard 6 and mouse 7 are provided at the display device 3 to enable an operator to interact with the low integrity report viewer 5, for example, to select the results of a particular ETCS design test or to carry out subsequent actions based on reviewing safety test results. The display device 3 is connected to a client computer 8 to enable the further input from the operator and to receive the data for the low integrity report viewer 5 from the high integrity safety test reporting system 2. The safety testing system 1 receives raw test data from a number of assets 9a, 9b, 9c... 9n via a communications network 10. The raw test data is uploaded 10a to the communications network 10 from each individual asset 9a, 9b, 9c...9*n* and downloaded 10b to the high integrity safety test reporting system 2. The high integrity safety test reporting system 2 processes the raw test data in order to generate a pre-filtered log file prior to display in the low integrity report viewer 5. The high integrity safety test reporting system 2 and the low integrity report viewer 5 operate together with the display device 3 to display the content of the pre-filtered log file in the low integrity report viewer 5. This is done by transmitting the log file and low integrity viewer 5 data to the client computer 8 to display on the display device 3 over a communications network 11. This may be the same communications network as that used by the assets 9a, 9b, 9c...9*n* to transmit information to the high integrity safety test reporting system 2 or a different communications network, depending on the individual arrangement of the safety testing system 1, as described in further detail below.

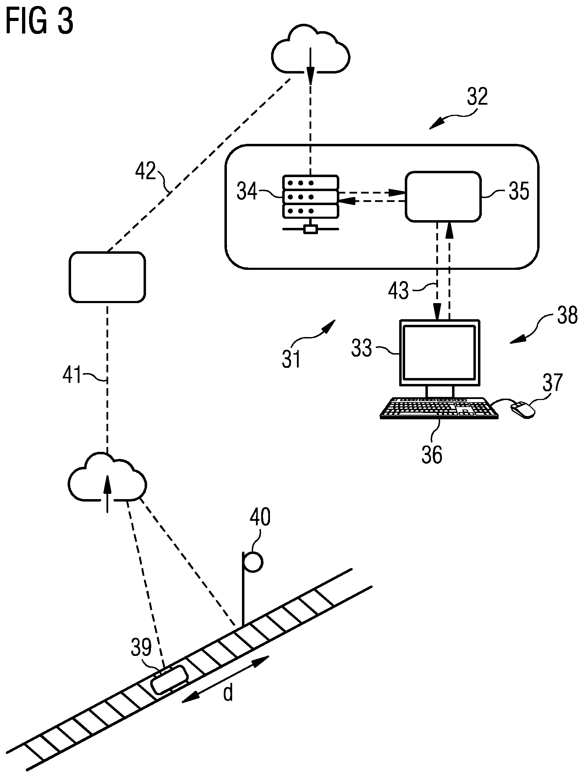

As an example, the embodiment described in relation to Figure 2 above may be used in carrying out safety testing within the rail infrastructure industry. Prior to commissioning a signalling design, it is necessary to carry out a number of safety checks in relation to the overall signalling system and its interaction with the rail infrastructure. This requires the safety test results for a large number of assets to be provided to an operator, with each asset potentially undergoing several different safety tests. Figure 3 is a schematic diagram of a rail infrastructure safety testing system in accordance with embodiments of the present invention. The rail infrastructure safety testing system 31 comprises a high integrity rail infrastructure safety test reporting system 32 and a display device 33. The high integrity rail infrastructure safety test reporting system 32 is hosted on a server 34, and a low integrity report viewer 35 is embedded within the high integrity safety test reporting system 32. A keyboard 36 and mouse 37 are provided at the display device 33 to enable an operator to interact with the low integrity report viewer 35, for example, to select the results of a particular ETCS design test or to carry out subsequent actions based on reviewing safety test results. The display device 33 is connected to a client computer 38 to enable the further input from the operator and to receive the data for the low integrity report viewer 35 from the high integrity rail infrastructure safety test reporting system 32. In this example, the rail infrastructure high integrity safety system 31 is being used to carry out a ETCS design test, and is checking the positioning of a balise 39 with respect to a signal 40. The balise 39 needs to be positioned a minimum distance d from the signal 40 to avoid RF interference effects that may corrupt or interrupt the passive data transmission between the balise 39 and a train (not shown). As part of the high integrity rail infrastructure safety system 31, a ETCS design test is performed, a component of which is a checker checking the distance between the balise 39 and the signal 40. The checker does this by using data relating to the positions of the balise 39 and signal 40 input to a remote reporting system 41 and downloaded to the high integrity rail infrastructure safety test reporting system 31 via a communications network 42 for inclusion in a log file of the ETCS design test.

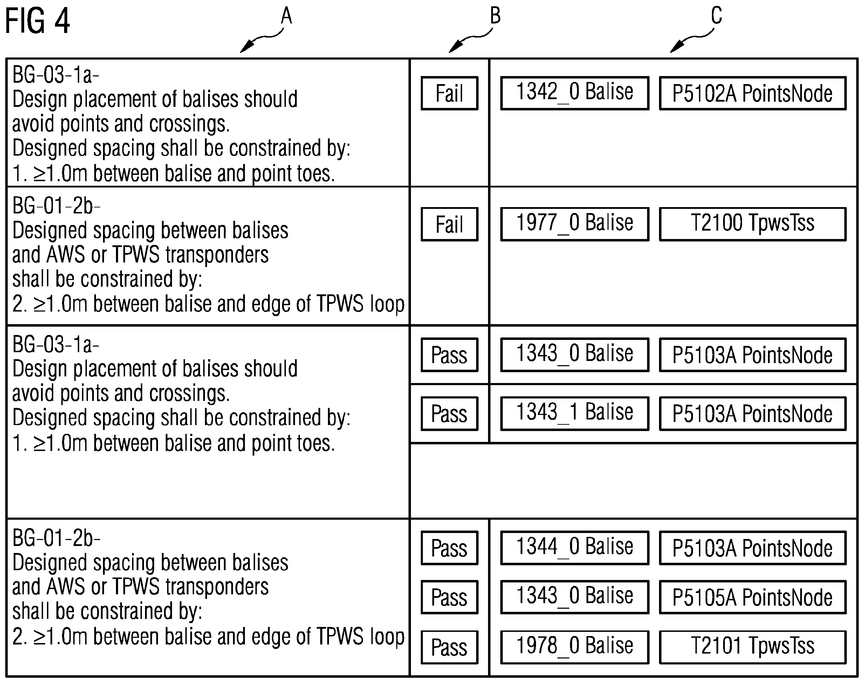

Figure 4 is an excerpt from a test log file for a ETCS design test using embodiments of the present invention. The high integrity rail infrastructure safety test reporting system 32 processes the raw test data in order to generate a pre-filtered log file prior to display in the low integrity report viewer 35. This can be seen in Figure 4, where the test data triggering a fail when checked by the checker is shown at the beginning of the report listing, rather than interspersed when displayed by test result. The columns A, B, C remain the same as in Figure 1, with A representing the test carried out, B the result and C the assets tested. For example, the first test (BG-03-1a-) determines whether or not the distance between a balise and point toes is greater than a minimum of 1m, or the distance d in Figure 3. The test result for the balise 1342_0 in relation to the points P5102A is a fail. However, it can be seen that further down the log file those balises and points that passed the test are listed. Similarly, for test BG - 01-2b- relating to the spacing between balises and AWS/TPWS transponders has been failed buy balise 1977_0 and transponder T2100. The high integrity rail infrastructure safety test reporting system 32 and the low integrity report viewer 35 therefore operate together with the display device 33 to display the content of this pre-filtered log file in the low integrity report viewer 35. This is done by transmitting the log file and low integrity viewer 35 data to the client computer 38 to display on the display device 33 over a communications network 43. Typically, this communications network 43 is a Local Area Network (LAN) for a physical server 34 located in the same location as the client computer 38. Alternatively, where the server 34 is a cloud server or implemented using distributed computer techniques, the communications network 42 may be the same communications network 42 as the server 34 uses to download the data for creating the log file.

Once the log file is created, whether for a safety testing system 1 or a rail infrastructure safety testing system 31, it is available for an operator to view and to provide associated input via the display device 3, 33 and other peripheral devices such as the keyboard 6, 36 and mouse 7, 37. The input is related to the test results displayed in the low integrity report viewer 5, 35, and may comprise reloading the log file to validate the results, selecting a result and entering data into a further application to determine details of the test carried out, requesting that the test generating the fail result is rerun, or forwarding the log file to either another stage in the overall commissioning process for the rail infrastructure or to another user.

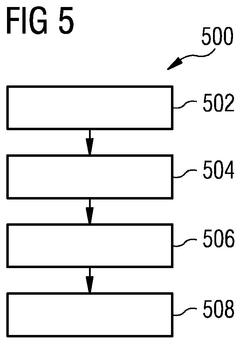

Figure 5 is a flowchart illustrating the steps in a method in accordance with the embodiments of the present invention. The method 500 displays the results generated in a safety testing system to an operator for input. At step 502, the method begins with receiving results of safety tests at a server 4, 34 hosting a high integrity safety test reporting system 2, 32. At step 504, the results are pre-filtered using the high integrity safety test reporting system 2, 32 into a log file. The pre-filtering of the safety test results comprises sorting the results of safety tests in a log file to display test fails first Next, at step 506, the log file is passed to a low integrity report viewer 5, 35, wherein the high integrity rail infrastructure safety test reporting system 2, 32 and the low integrity report viewer 5, 35 are embedded in a server 4, 34 in the safety testing system 1, 31. Finally, at step and 508, the high integrity safety test reporting system 2, 32 and the low integrity report viewer 5, 35 are operated together with a display device 3, 33 to display the log file to an operator for input. As above, once the log file is created, whether for a safety testing system 1 or a rail infrastructure safety testing system 31, it is available for an operator to view and to provide associated input via the display device 3, 33 and other peripheral devices such as the keyboard 6, 36 and mouse 7, 37. The input is related to the test results displayed in the low integrity report viewer 5, 35, and may comprise reloading the log file to validate the results, selecting a result and entering data into a further application to determine details of the test carried out, requesting that the test generating the fail result is rerun, or forwarding the log file to either another stage in the overall commissioning process for the rail infrastructure or to another user.

In both the safety testing system 1, 31 and method 500 described above, the low integrity report viewer 5, 35, may be a commercial off-the shelf report viewer, such as a browser. In particular, in rail infrastructure safety test systems 31 must meet EN 50129 SIL4 requirements. The low integrity report viewer 35 however does not meet and does not need to meet any SIL requirements under EN 50129, thus removing the need for high integrity interfaces for log files in safety testing systems in rail infrastructure. In other words, a basic integrity checking tool (previously known as SIL 0) can be used as part of the data preparation process for a SIL 4 system in which the log files are viewable using a non-SIL compliant low integrity report viewer 35. This leads to overall simplification of the pre-commissioning process, since both the, input to, and output as viewed and interacted with by an operator from, a high integrity rail infrastructure safety test reporting system, do not need to meet the EN 50129 SIL4 requirements.

## Claims

1. A safety testing system, comprising:
a display device; and
a server hosting a high integrity safety test reporting system and a low integrity report viewer embedded in the safety testing system;
wherein the high integrity safety test reporting system and the low integrity report viewer operate with the display device to display a set of safety test results that require an operator input and are pre-filtered by the high integrity safety test reporting system into a log file prior to display in the low integrity report viewer.

2. A safety testing system as claimed in claim 1, wherein the pre-filtering of the safety test results comprises sorting the results of safety tests in a log file to display test fails first.

3. A safety testing system as claimed in claim 1, wherein the low integrity report viewer is a commercial off-the-shelf report viewer.

4. A safety testing system as claimed in claim 3, wherein the low integrity report viewer is a browser.

5. A safety testing system as claimed in any preceding claim, wherein the server is a cloud-based server or distributed computing server.

6. A safety testing system as claimed in any preceding claim, wherein the safety testing system is a rail infrastructure safety system.

7. A safety testing system as claimed in claim 6, wherein the high integrity rail infrastructure safety system meets EN 50129 SIL4 requirements.

8. A safety testing system as claimed in claim 6, wherein the low integrity report viewer does not meet or need to meet any SIL requirements under EN 50129.

9. A method of a displaying results generated in a safety testing system to an operator for input, comprising:
receiving results of safety tests at a server hosting a high integrity safety test reporting system;
pre-filtering the results using the high integrity safety test reporting system into a log file;
passing the log file to a low integrity report viewer, wherein the high integrity rail infrastructure safety test reporting system and the low integrity report viewer are embedded in a server in the safety testing system and
operating the high integrity safety test reporting system and the low integrity report viewer with a display device to display the log file to an operator for input.

10. Method as claimed in claim 8, wherein the pre-filtering of the safety test results comprises sorting the results of safety tests in a log file to display test fails first.

11. Method as claimed in claim 8, wherein the low integrity report viewer is a commercial off-the-shelf report viewer.

12. Method as claimed in claim 11, wherein the low integrity report viewer is a browser.

13. Method as claimed in any of claims 8 to 12, wherein the server is a cloud-based server or distributed computing server.

14. Method as claimed in any of claims 8 to 13, wherein the safety testing system is a rail infrastructure safety system.

15. Method as claimed in claim 14, wherein the high integrity rail infrastructure safety system meets EN 50129 SIL4 requirements.

16. Method as claimed in claim 14, wherein the low integrity report viewer does not meet or need to meet any SIL requirements under EN 50129.
